Europäisches Patentamt

European Patent Office

Office européen des brevets

(11) Veröffentlichungsnummer: **0 192 808**
**A2**

## (12) EUROPÄISCHE PATENTANMELDUNG

(21) Anmeldenummer: 85107347.8

(22) Anmeldetag: 13.06.85

(51) Int. Cl.⁴: **G 01 S 13/28**
**G 01 S 13/44**

(30) Priorität: 28.02.85 CH 919/85

(43) Veröffentlichungstag der Anmeldung:
03.09.86 Patentblatt 86/36

(84) Benannte Vertragsstaaten:
CH DE FR GB IT LI NL SE

(71) Anmelder: SIEMENS-ALBIS AKTIENGESELLSCHAFT
EGA1/Verträge und Patente Postfach
CH-8047 Zürich(CH)

(72) Erfinder: Bächtiger, Rolf
Eggächer 119
CH-8966 Oberwil(CH)

(54) Anordnung zur Regelung eines mehrkanaligen Pulskompressionssystems.

(57) Zur Regelung eines mehrkanaligen Pulskompressionssystems ist ein Sender derart vorgesehen, dass jeweils nach einer vorbestimmten Anzahl von Sendeimpulsen ein nicht expandierter Dauerstrichsignalimpuls ausgesendet wird. Empfangsseitig sind mindestens zwei zwischen einem Mikrowellenempfängerteil (E) und einem Demodulator (D) eingefügte Kompressionskanäle (K1, K2) vorhanden, an deren Ausgängen je ein Prüfsignal (z1, z2) ausgekoppelt wird, die in einer Regelschaltung (RS2) verglichen werden, um ein Phasen- und ein Amplitudendifferenzsignal zu gewinnen, aus denen je ein Regelungssignal (u2, v2) abgeleitet wird, um einen Phasenschieber und ein Dämpfungsglied, die in einem der Kompressionskanälen (K2) vorhanden sind, derart zu steuern, dass das Phasen- und das Amplitudendifferenzsignal gegen Null geregelt werden.

FIG.2

Anordnung zur Regelung eines mehrkanaligen Pulskompressionssystems

Die vorliegende Erfindung betrifft eine Anordnung zur Regelung eines mehrkanaligen Pulskompressionssystems nach dem Oberbegriff des Patentanspruches 1.

In mehrkanaligen Pulskompressionssystemen, wie sie in der Radar- und Ortungstechnik eingesetzt werden, wirken sich gewisse Einflüsse wie die Sonneneinstrahlung oder die Alterung unterschiedlich in den verschiedenen Kanälen aus. Somit müssen die Phase und die Amplitude des Signals eines Kanals in bezug auf das Uebertragungsverhalten des Signals eines als Referenz gewählten Kanals geregelt werden, um die gewünschte Genauigkeit zu erreichen, die in solchen Systemen, insbesondere bei der Winkelbestimmung in hohem Grade vom Gleichlaufverhalten der Empfangskanäle abhängt. Die bekannten Regelungsverfahren werden den Anforderungen, die sich bei Systemen mit sehr kurzer Impulsdauer stellen, nicht gerecht. Die Erfindung zeigt demgegenüber einen Weg, um eine Anordnung zur Regelung eines mehrkanaligen, sehr breitbandigen, hochauflösenden Pulskompressionssystems zu schaffen, das mit extrem kurzer Impulsdauer arbeitet.

Diese Aufgabe wird erfindungsgemäss mit einer Anordnung gelöst, deren Merkmale aus dem kennzeichnenden Teil des Patentanspruchs 1 hervorgehen. Vorteilhafte Ausgestaltungen der Erfindung ergeben sich aus den weiteren Ansprüchen. Die Erfindung wird nachfolgend durch Beschreibung von Ausführungsbeispielen näher erläutert. Es zeigt:

Fig. 1 das Blockschaltbild eines Expanders nach der Erfindung

Fig. 2 das Blockschaltbild eines erfindungsgemässen dreikanaligen Pulskompressionssystems

Fig. 3 das Blockschaltbild einer erfindungsgemässen Anordnung zur Regelung eines zweikanaligen Pulskompressionssystems und

Fig. 4 das Oszillogramm eines expandierten Signals.

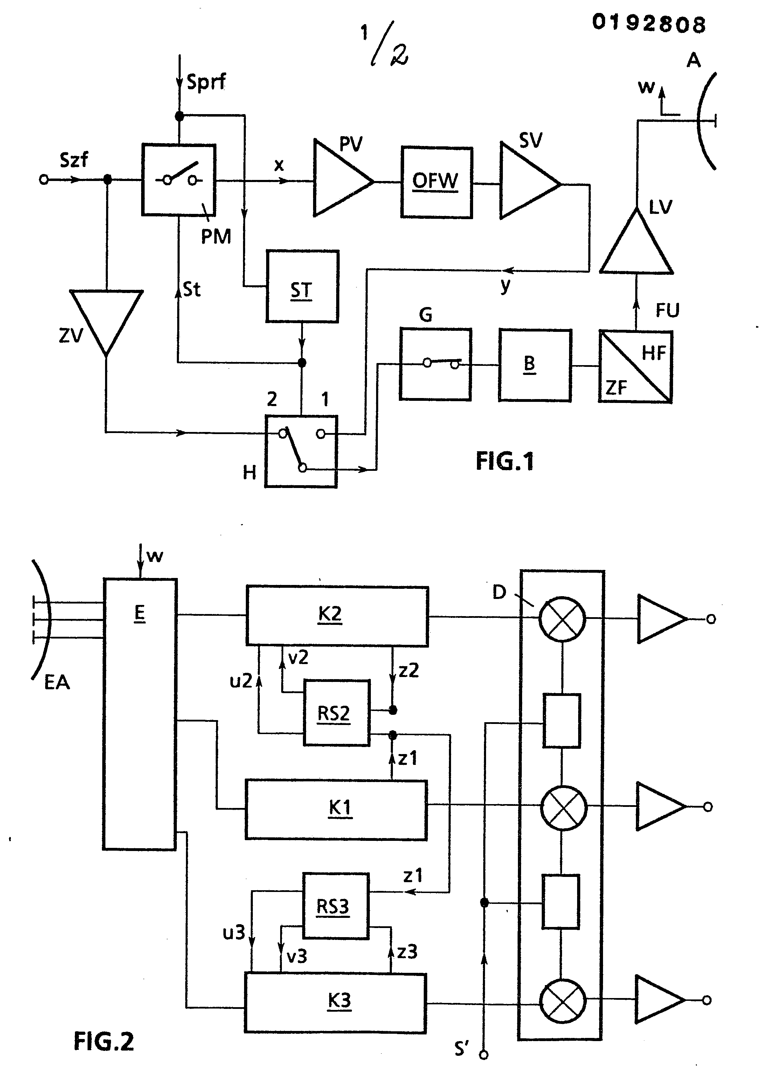

Der Expander nach Fig. 1 weist ein Expansionsfilter OFW auf, das eingangsseitig mit einem über einen Pulsmodulator PM geführten Zwischenfrequenzsignal Szf beaufschlagt ist. Das Expansionsfilter OFW, dem ein Pulsverstärker PV vor- und/oder ein Signalverstärker SV nachgeschaltet werden kann, ist ausgangsseitig über die Reihenschaltung eines Hochfrequenztores G und eines Begrenzers B mit dem Eingang eines Frequenzumsetzers FU verbunden.

85P9805
0192808

Der Ausgang des Umsetzers FU ist über einen Leistungsverstärker LV an eine Sendeantenne A angeschlossen. Erfindungsgemäss ist zwischen dem Eingang des Pulsmodulators PM und dem Eingang des Tors G gegebenenfalls in Reihe mit einem zusätzlichen Verstärker ZV ein Hochfrequenzumschalter H eingefügt. Der
Pulsmodulator PM und der Umschalter H sind vom Ausgangssignal St einer Steuerschaltung ST ein- bzw. ausschaltbar, die beispielsweise einen Frequenzteiler 1 zu N
für ein Pulsrepetitionsfrequenzsignal Sprf umfasst.

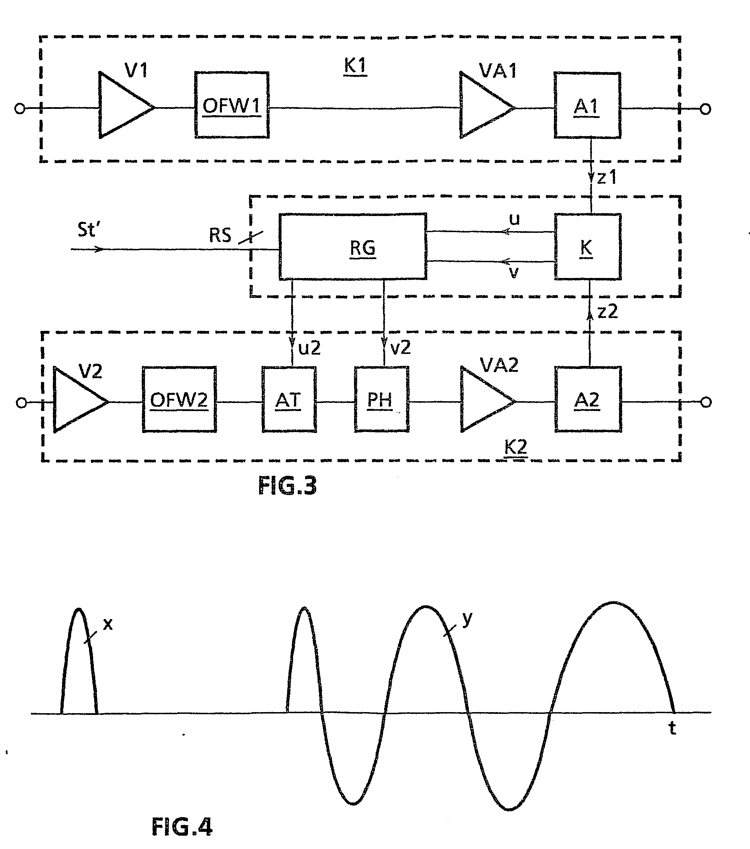

Die Arbeitsweise eines Expanders nach Fig. 1 ohne Verstärker ZV und mit dem Umschalter H in Position 1 ist an sich prinzipiell bekannt. Der vom Signal Sprf gesteuerte
Pulsmodulator PM lässt jeweils nur einen einzelnen Impuls oder ein kurzes Impulspaket x (Fig. 4) aus dem Dauerstrichsignal Szf – d.h. einen trägerfrequenten, nicht
frequenzmodulierten Impuls (burst) – durchkommen, sofern er durch das Signal St
eingeschaltet ist. Das Expansionsfilter OFW, das eine dispersive Oberflächenwellen-
oder SAW-Verzögerungsleitung umfasst, expandiert das Signal x derart, dass es ausgangsseitig als eine frequenzmodulierte Welle y (Fig. 4) erscheint, deren Signaldauer
um ein Vielfaches länger als die Pulsbreite des Signals x ist. Das Signal y wird danach
auf einen hochfrequenten Träger im Mikrowellenbreich umgesetzt, verstärkt und ausgestrahlt. Vom ausgestrahlten Signal wird ein Teil w an der Antenne A ausgekoppelt.
Der Umschalter H wird nur auf Position 2 umgeschaltet, nachdem eine Anzahl N
Impulspakete x durchlaufen sind, wobei die Zahl N relativ gross, z.B. N = 100, und
zeitabhängig sein kann. Da der Pulsmodulator PM während dieser Zeit kein Signal
abgibt, wird periodisch oder zu einem beliebigen Zeitpunkt ein Dauerstrichsignal Szf an
der Stelle des Signals y durchgelassen, und zwar jeweils über die vom Tor G bestimmte
Dauer. Das Tor G hat zudem die Aufgabe, die Dauer des Signals y etwas einzuschränken, um Ein- und Ausschwingungen abzuschneiden.

Das dreikanalige Pulskompressionssystem nach Fig. 2 weist einen an eine Antenne EA
angeschlossenen Mikrowellenempfänger E auf, der ausgangsseitig über drei Kanäle K1,
K2, K3 an einen Demodulator D angeschlossen und eingangsseitig mit dem Signal w
beaufschlagt ist. Das System umfasst zudem zwei Regelschaltungen RS2 und RS3,
deren Ausgangssignale u2, v2 bzw. u3, v3 zur Regelung der Kanäle K2 bzw. K3
dienen, wobei eingangsseitig die erste Regelschaltung RS2 mit abgezweigten, den
Kanälen K1 und K2 entnommenen Signalen z1 bzw. z2 und die zweite Regelschaltung
RS3 mit dem Signal z1 und einem abgezweigten, dem Kanal K3 entnommenen
Signal z3 beaufschlagt wird. Die Arbeitsweise des Systems nach Fig. 2 wird anhand
der in Fig. 3 dargestellten Anordnung erläutert.

In Fig. 3 sind weitere Einzelheiten der Kanäle K1 und K2 und der Regelschaltung RS angegeben. Der Kanal K1 umfasst die Reihenschaltung eines Verstärkers V1, eines Kompressors OFW1, eines weiteren Verstärkers VA1 und eines ersten Auskopplers A1, der mit dem ersten Eingang des von einem Ueberlagerungssignal S' (local oscillator signal) gesteuerten Demodulators D (Fig. 2) verbunden ist. Das Signal S' kann ein ZF-Referenzsignal, beispielsweise ein vom Signal Szf abgeleitetes Signal sein.

Der Kanal K2 besteht aus der Reihenschaltung eines Verstärkers V2, eines zweiten Kompressors OFW2, eines gesteuerten Dämpfungsgliedes AT, eines gesteuerten Phasenschiebers PH, eines weiteren Verstärkers VA2 und eines zweiten Auskopplers A2, der an den zweiten Ausgang des Demodulators D (Fig. 2) angeschlossen ist. In der Regelschaltung RS (Fig. 3) ist zudem ein Komparator K vorhanden, der ein-gangsseitig einerseits mit dem zweiten Ausgangssignal z1 des ersten Auskopplers A1 und andererseits mit dem zweiten Ausgangssignal z2 des zweiten Auskopplers A2 be-aufschlagt ist und zwei Spannungsfehlersignale u und v abgibt, die getrennten Eingängen eines Reglers RG zugeführt werden. Der Regler RG, der je eine von einem Signal St' gesteuerte Abfrage- und Halteschaltung mit je einer Regelstrecke aufweist, liefert je ein Steuersignal u2 bzw. v2, die zur Steuerung des Dämpfungsgliedes AT bzw. des Phasenschiebers PH dienen.

Die Arbeitsweise einer Anordnung nach Fig. 3 ist an sich bekannt, mit Ausnahme der Funktion der Elemente K, RG, AT und PH. Ein über die Antenne EA (Fig. 2) empfangenes expandiertes Signal wird vom Kompressor OFW1 (Fig. 3), der eine dispersive Oberflächenwellenverzögerungsleitung umfasst, komprimiert und über den Auskoppler A1 an den Demodulator D (Fig. 2) weitergeleitet, der auch ein Quadratur-Demodulator sein könnte.

Wenn gelegentlich zum Kompressor OFW1 (Fig. 3) ein Signal gelangt, das im Sender über den Schalter H (Fig. 1) statt über den Expander OFW durchkam und das daher keine frequenzmodulierte Welle darstellt, wird es vom Kompressor OFW1 (Fig. 3) nicht komprimiert, da er nur vorbestimmte frequenzmodulierte Wellen komprimieren kann. Von einem solchen Signal wird dann im Auskoppler A1 ein Signalanteil z1 ausge-koppelt. Entsprechendes geschieht mit dem zweiten Kanal K2, bei dem der Kom-pressor OFW2 ebenfalls nur frequenzmodulierte Wellen komprimieren kann und die Elemente AT und PH lediglich eine Amplituden- bzw. eine Phasenregelung bewirken. Im Regler RG werden die Fehlspannungssignale gerade dann abgefragt und gespeichert, wenn das Signal St' vorliegt, das dieselbe Repetitionsfrequenz wie das Signal St aufweist. Gegenüber dem Signal St kann jedoch das Signal St' verzögert sein und eine andere Impulsbreite aufweisen.

Wenn Sender und Empfänger nicht am gleichen Ort sind, so dass das Signal St nicht zur Verfügung steht, könnte der Komparator K Einrichtungen enthalten, die ihm erlauben, nur nichtfrequenzmodulierte Wellen auszuwerten.

Die vom Regler RG abgegebenen Signale u2 und v2 regeln den zweiten Kanal K2 derart, dass die Signale u und v im Durchschnitt gegen Null gehen. Da nach diesem Verfahren die Sendeleistung nicht ändert, stellen sich keine Probleme bei der Dimensionierung des Senders in bezug auf seine Leistung. Die Erfindung ist nicht auf zwei Kanäle beschränkt, sondern sie kann in gleicher Weise bei drei oder mehr Kanälen angewendet werden, indem beispielsweise die Signale u3 und v3 (Fig. 2) je ein weiteres Dämpfungsglied bzw. einen Phasenschieber in entsprechender Weise regeln. Im übrigen könnte beispielsweise (Fig. 3) das Dämpfungsglied AT sonst auch zwischen dem Ausgang des Kompressors OFW1 und dem Eingang des Verstärkers VA1 im Kanal 1 eingefügt sein. Anstelle von Dämpfungsgliedern AT könnten ebenfalls geregelte Verstärker eingesetzt werden.

Die Anordnung nach der Erfindung kann auch in einem Radargerät Anwendung finden, bei dem eine einzige Antenne mit einer Sender-Empfänger-Einheit vorhanden ist, weil dadurch die Arbeitsweise der Anordnung nicht beeinflusst wird. Derartige Radargeräte sind beispielsweise aus der CH-PS 592 887 oder EP-PS 0 027 122 bekannt.

Die erfindungsgemässe Anordnung ermöglicht eine sehr genaue Regelung in Radargeräten, die mit kurzen Impulsen arbeiten, und bringt bei Radargeräten, die mit relativ langen Impulsen arbeiten, den Vorteil mit sich, dass die Regelung den Fehler schon nach einem Impuls abbauen kann. In solchen Fällen kann die Zahl N grösser sein, z.B. N = 1000 oder mehr.

## PATENTANSPRUECHE

1. Anordnung zur Regelung eines mehrkanaligen Pulskompressionssystems mit einem Sender, in dem ein Dauerstrichsignal (Szf) über die Reihenschaltung eines Pulsmodulators (PM), eines Expansionsfilters (OFW) und eines Leistungsverstärkers (LV) der Antenne zugeführt wird, d a d u r c h   g e k e n n z e i c h n e t, dass zwischen dem Eingang des Pulsmodulators (PM) und dem Ausgang des Expansionsfilters (OFW) ein Schalter (H) eingefügt ist, und dass dieser Schalter (H) und der Pulsmodulator (PM) derart von einem Steuersignal (St) ein- bzw. ausgeschaltet werden, dass jeweils nach einer vorbestimmten Anzahl (N) von Sendeimpulsen (y) ein Dauerstrichsignal-Impuls (szf) ausgesendet wird.

2. Anordnung nach Anspruch 1, d a d u r c h   g e k e n n z e i c h n e t, dass empfangsseitig mindestens zwei zwischen einem Mikrowellenempfängerteil (E) und einem Demodulator (D) eingefügte Kompressionskanäle (K1, K2) vorhanden sind, an deren Ausgängen je ein Prüfsignal (z1, z2) ausgekoppelt wird, die in einem Komparator (K) verglichen werden, um ein Phasendifferenzsignal (u) und/oder ein Amplitudendifferenzsignal (v) zu gewinnen, und dass ein Regler (RG) vorhanden ist, der daraus mindestens ein Regelungssignal (u2, v2) ableitet, um mindestens einen Phasenschieber (PH) und/oder einen regelbaren Verstärker (AT), die jeweils einem in den Empfangskanälen vorhandenen Kompressor (K1, K2) nachgeschaltet sind, derart zu steuern, dass das Phasendifferenzsignal (u) bzw. das Amplitudendifferenzsignal (v) gegen Null geregelt werden.

3. Anordnung nach Anspruch 2, d a d u r c h   g e k e n n z e i c h n e t, dass im Regler (RG) eine Abfrage- und Halteschaltung vorhanden ist, durch die mindestens ein Fehlerspannungssignal (u, v) und/oder ein Regelungssignal (u2, v2) immer dann abgefragt und gespeichert werden, wenn ein Signal (St') vorliegt, das dieselbe Repetitionsfrequenz wie das Steuersignal (St) des Schalters (H) aufweist.

4. Anordnung nach Anspruch 2 oder 3, d a d u r c h   g e k e n n z e i c h n e t, dass der regelbare Verstärker (AT) ein regelbares Dämpfungsglied ist.

FIG.1

FIG.2

0192808

1/2

0192808

FIG.3

FIG.4